# EUROPEAN PATENT SPECIFICATION

(11) **EP 1 755 866 B1**
(45) Date of publication and mention of the grant of the patent: **11.06.2014**
(21) Application number: 05738028.9
(22) Date of filing: 26.04.2005
(51) Int. Cl.: B29C 67/24, B29C 45/14, B29C 49/20, B29D 23/00, B29C 63/10, B29C 47/02, B32B 1/08, B32B 27/08, B29L 9/00

(54) **PROCESS FOR THE MANUFACTURE OF A MULTI-LAYERED POLYMER BODY**
Verfahren zum Herstellen eines mehrschichtigen Polymergegenstandes
Procédé de fabrication d'un objet polymère multicouche

(30) Priority: 27.04.2004 EP 04101756
(43) Date of publication of application: 28.02.2007
(73) Proprietor: Egeplast Werner Strumann GmbH & Co. KG, 48268 Greven (DE)
(72) Inventor: DEHENNAU, Claude, B-1410 WATERLOO (BE); MATZ, Pierre, B-1457 NIL SAINT VINCENT (BE)
(74) Representative: Fritz & Brandenburg Patentanwälte
(86) International application number: PCT/EP2005/051867
(87) International publication number: WO 2005/102674

(56) References cited:
- WO-A-98/01285
- WO-A-02/087874
- WO-A-02/088589
- JP-A- 2000 283 343
- JP-A- 2000 291 840
- US-A- 4 348 445
- US-A- 4 512 838

## Description

The present invention relates to a process for the manufacture of a multi-layered polymer body according to the preamble of claim 1.

Although polymer bodies having good mechanical properties are available in plenty of forms and sizes, for certain applications, reinforcement is necessary in order to rigidify the polymer bodies and to increase their resistance against internal pressure. In particular, containers of a high capacity or tubes of a big diameter need further mechanical support. The reinforcement may be realized either by intermediate heterogeneous elements such as fibers made from glass, carbon or aramide or by means of metallic elements such as metallic belts which can be applied e. g. to a fuel tank after its production by injection molding.

Several methods for reinforcing polymer bodies make use of oriented thermoplastic polymers which have been subject to extensive investigation and research. It is known from the prior art that stretching a semi-crystalline polymer film at a temperature slightly below its melting temperature results in a mono- axial orientation of the polymer chains in longitudinal direction. Techniques for the manufacture of oriented polymers rely on realigning the existing crystal structure into a highly oriented fibrilliar structure by an extension deformation process. Such mono-axially oriented polymers exhibit certain mechanic properties which are superior over the properties of non-oriented polymers. For example, reinforced polymer strips made of mono-axially oriented polymers may be applied to tubes for enhancing their resistance against hydrostatic pressure. In comparison to conventional tubes not supported by said reinforced polymer strips, the working pressure may be increased or the thickness of the tube, which is required to withstand the pressure the tube is exposed to, may be decreased.

Because of their low costs and their ability of being recycled, particularly when the components of the composite materials are composed of the same type of polymer, the use of oriented polymers for reinforcing polymer bodies is advantageous when compared with conventional methods using metallic belts, fibers and the like.

To achieve an optimal reinforcing effect the oriented polymer is preferably brought into intimate contact with the polymer body. Techniques based on adhesives have been proposed for fixing reinforcing elements to each other or on a support. However, these techniques may only be realized with a few polymers, but not with polymers which are of particular interest, such as high density polyethylene (HDPE), polypropylene (PP) and polyvinylidene fluoride (PVDF).

Furthermore, there is no intimate contact between the reinforcing elements and the support, as the layer formed by the adhesive is in between. The use of an adhesive also impairs the recycling process, as the chemical nature of the adhesive usually differs from the chemical nature of the polymers the adhesive is applied to.

Techniques to achieve an intimate contact between a reinforcing element composed of an oriented polymer and an element composed of a non-oriented polymer (or a further oriented polymer) rely on the thermoplastic properties of most polymers and more particularly, on their ability to fuse together.

However, such methods are usually faced with the problem that the orientation of the molecular chains within the oriented polymer is reversible at high temperatures, particularly above the melting point. In the molten state the mobility of the molecular chains is sufficiently high to allow random orientation thereby destroying the internal fibrilliar structure which is responsible for the superior mechanical properties. Therefore, high temperatures should generally be avoided when processing oriented polymers. Accordingly, it was generally admitted that oriented and non-oriented polymers may not be connected by recasting without destroying the internal structure of the oriented polymer.

The reversibility of the orientation process mentioned above becomes particularly relevant when it is intended to contact a non-oriented polymer in its molten state with an oriented polymer of the same chemical nature in its solid state. As the melting temperature of the non-oriented polymer and the oriented polymer are identical or very close to each other, one should expect that the heat transfer at the contact area is sufficiently high to melt the oriented polymer thereby destroying its internal fibrilliar structure. Accordingly, so far it has not been proposed in the prior art to contact a reinforcing element composed of an oriented polymer with a stream of a molten polymer, as a skilled person would expect the heat emitted by the molten polymer to disturb the fibrilliar orientation of the molecular chains within the oriented polymer.

To avoid said heat transfer processes have been developed wherein a layer composed of an oriented polymer is protected by an intermediate layer of non- oriented polymer serving as a thermal shield (cf. e. g. WO 02/087874 and

WO 02/088589). WO 02/088589 discloses a process for the manufacture of a reinforced plastic tube comprising the step of winding in a specific manner at least two layers of reinforcing strips composed of oriented polymers around a tubular polymeric mandrel. Preferably, the orientation of the polymer molecules within the reinforcing strips is protected by winding a thin thermal protection strip around the reinforcing layer. The thermal protection strip is composed of a non-oriented polymer which is compatible with the oriented polymer of the subjacent layer. Thereafter, an exterior finishing layer is extruded over the layer formed by said thin thermal protection strips. The exterior finishing layer is composed of a non-oriented polymer which is compatible with the subjacent thin thermal protection strips. Advantageously, the thickness of the layer formed by the thin thermal protection strips is adjusted so that it serves as an effective thermal shield thereby maximally limiting the loss of orientation of the oriented polymers within the reinforcing strips during the extrusion of the finishing layer.

However, there is no intimate contact between the reinforcing strips and the finishing layer, as the layer formed by the thermal protection strip is in between. Furthermore, the additional step of applying the thermal protection strip is required in order to produce the reinforced polymer body, which is expensive.

US-A-4 348 445 discloses a process for the manufacture of a reinforced film structure in the form of a laminate, wherein an unoriented thermoplastic copolymer film and an oriented polypropylene netting are combined by lamination. The netting layer has main filaments running in a first direction and tie filaments running in a direction perpendicular to the first direction. Hence the netting layer is oriented in two directions orthogonal to each other and not in one preferred direction. This known process for the production of a multi-layer film structure does not give any hint to a man skilled in the art for the production of a multi-layered pipe, which is at least in part extruded through an annular die.

JP 2000 283343 A discloses a process according to the preamble of claim 1.

Therefore, there is a demand for an economical process for the manufacture of reinforced polymer bodies which has advantages over the prior art and, in particular, in which a comparably large portion of the surface of a non-oriented polymer is directly and intimately contacted with an oriented polymer without significantly destroying the internal fibrilliar structure of the oriented polymer. The reinforced polymer bodies should have comparable, preferably better properties than the polymer bodies of the prior art, in particular, they should exhibit a good reinforcing effect, i. e. the portion of the oriented molecular chains within the reinforcements should be as high as possible and should not be significantly decreased by the process of manufacture.

It has been surprisingly found that the fibrilliar structure within an oriented polymer is not significantly disturbed when a solid layer of an oriented polymer is directly and intimately contacted with a stream of a molten polymer, provided that the latter is rapidly cooled. Accordingly, the present invention provides a process for the manufacture of a multi-layered polymer body comprising at least one reinforcing layer composed of an oriented polymer and at least one basic polymer layer directly in contact with at least a part of the reinforcing layer, wherein the polymer of the basic layer is compatible with the oriented polymer of the reinforcing layer and has about the same melting temperature, said process comprising the steps of
(a) applying the basic polymer layer by extrusion coating as a stream of molten polymer to at least a part of the surface of the reinforcing layer; and
(b) solidifying the molten polymer on the surface of the reinforcing layer by cooling,
wherein the multi-layered polymer body is a pipe and
wherein the reinforcing layer is applied by winding a reinforced polymer strip composed of an oriented polymer around a support pipe and wherein the basic polymer layer is applied on top of the reinforcing layer,
characterized in that the molten polymer is solidified by rapid cooling so that only a small portion of the reinforcing layer melts, said rapid cooling being performed by means of a cooled metal cylinder through which the pipe passes and which is cooled by a fluid able to cool it below 20 °C or by means of cold water jets directly applied on the pipe.

The inventors of the present invention have surprisingly found that it is possible to extrude or to inject molten polymers along strips composed of oriented polymers without thermally protecting them and without significantly altering their properties, provided that the molten polymer is rapidly cooled once it has been placed on the layer composed of the oriented polymer. In that case, just a very thin portion of the oriented polymer's thickness (only a few µm (typically 50 to 100 µm only) of generally 500 µm to 1.5 mm or even to 2 mm) is molten allowing the oriented strip to be perfectly connected to the solidified polymer but retaining the orientation of the large majority of the molecular chains.

The process according to the present invention provides a simple and effective process for the manufacture of reinforced polymer bodies. This technique may be realized by a high number of procedures without the use of thermally insulating layers or special and expensive adhesives. Therefore, a full ability of being recycled is achieved. Furthermore, the technique allows a facile processing of the reinforced polymer bodies. In view of the relative simplicity of producing reinforced polymer strips which may serve as reinforcing elements, the costs of the process are minimized. Finally, the process of the invention allows the use of the same polymer for the basic polymer layer and for the reinforcing layer, so that a mono-material item can be obtained, which is easier to recycle than an multi-material one.

By "polymer" according to the present invention is meant any composition including a synthetic resin, most preferably a thermoplastic resin which may be a homopolymer, copolymer... Such resin may be a polyolefin, a polyvinyl(idene) halide (like PVC (polyvinyl chloride) or PVDF (polyvinylidene fluoride) for instance), a polyketone, a polyamide (PA). Good results have been obtained with polyolefins, more particularly with polyethylene (PE) and most particularly, with HDPE (High Density PolyEthylene). In addition to said synthetic resin, the composition may contain any usual additive like stabilizer, filler, plasticizer...

As explained above, the polymer of the reinforcing layer and the one of the basic layer must be compatible and have about the same melting temperature (i.e. have their melting temperatures differing by less than 25 C, preferably by less that 10 C, and even more, by less than 5 C). Most preferably, for the ease of recycling of the polymer body, they are identical or at least, of the same chemical nature i. e. based on the same monomers.

The key of the process according to the present invention is the rapid cooling of the molten polymer in contact with the oriented polymer. Preferably, the polymer of the basic layer directly in contact with the reinforcing layer is cooled at a speed of higher or equal to 10 C per second (C/s) and most preferably, higher or equal to 100 C/s. In fact, what is crucial is the fact that the core of the oriented polymer layer should not get at a temperature too close to its orientation temperature. Most particularly in the case of HDPE (high density polyethylene) as the oriented polymer, this generally means that the core should not exceed a temperature of about 100 C. The optimization of the speed/intensity of cooling is easily performed by a person of ordinary skill in the art, using common cooling fluids (like water for instance).

The way in which the stream of molten polymer of the basic layer is applied to the reinforcing layer is by extrusion coating, which gives good results; in that case, rapid cooling means giving good results are either a bear metal cylinder through which the tube passes and which is cooled by an adequate coolant (preferably, a fluid able to cool it below 20 C); or water jets directly applied on the tube. In each of these techniques, the fact that the strips are prevented from distortion through the use of an adequate support (support pipe or mold) is advantageous.

According to a preferred embodiment, the surface of the reinforcing layer which will be in contact with the molten polymer is embossed (i. e. roughened with a given profile) before said contact in order to promote the adhesion of the molten polymer thereon. An embossing heaving a depth equal or greater than 50 m, or even than 100 m, gives good results. Any method for embossing the strip may be used; most preferably, the embossment is performed by laminating the oriented tape between two rolls.

The process according to the present invention is used for the manufacture of reinforced polymer bodies, namely hollow polymer elements such as pipes.

Regarding the process for the manufacture of reinforced polymer pipes, in a first step, a support pipe is provided, for instance by extrusion. Then, the reinforcing layer is applied by winding a reinforced polymer strip composed of an oriented polymer around the support pipe. Finally, the basic polymer layer (in this case, the outer, finishing layer) is applied on top of the reinforcing layer and rapidly cooled in a cold water bath and/or by using the above mentioned cooling cylinder or cold water jets.

Most preferably in that case, the polymer strip is adhered to the support pipe by applying electromagnetic irradiation, for instance by using a laser welding machine. More details regarding this technique can be found in patent application FR 2836652.

According to this embodiment, the reinforced polymer strip is preferably wound at least twice (or two separated oriented strips, eventually themselves wound on a mandrel, can be wound around it, one after another) thereby defining an angle between the windings. This angle is by definition different from 0 and 180 °C, i.e. the windings of both layers are not parallel. Most preferably, each layer has windings having an angle (with respect to the extrusion direction of the support pipe) equal in absolute value to the angle of the windings of the other layer, but with an opposite sign. Such pipes are described in more details in WO 02/088589.

In the above mentioned embodiments using a reinforced (oriented) polymer strip, said strip may be a multilayer strip, for instance obtained by coextrusion and simultaneous drawing (orientation) of the layers. More specifically, this strip may comprise 2 layers, A and B, layer A being the thickest and comprising preferably 95 to 99% of the total thickness of the strip, while layer B would be a kind of surface layer, intended to be in contact with the molten polymer and whose nature would be chosen so as to promote adhesion with said molten polymer. In that regard, while layer A is preferably made of the same polymer than the molten one (mainly for ease of recycling), layer B would preferably be made of a polymer of the same nature and/or compatible with the molten polymer, but having a lower molecular weight and/or fusion temperature.

For example, in the case the molten polymer and layer A would be made of HDPE, layer B could be a LDPE, a LLDPE or a HDPE.

The present invention is illustrated in a non limitative way by the following examples.

### Example 1

An oriented HDPE (high density polyethylene, grade Eltex# TUB 121 from BPS) strip of 1.2 mm has been obtained by extrusion and monoaxial orientation of a factor 10 at a temperature of about 115 C (the melting point of the HDPE being 142 C). This has been achieved by: . first extruding the HDPE using a KUHNE extruder equipped with a screw of
60 mm diameter rotating at a speed of 50 rpm (throughput of 50 kg/h) and with a flat JOHNSON die 300 mm wide and 8 mm deep; . sizing the obtained sheet through a calendar equipped with 3 rolls at 50 C; . heating the sized sheet at 115 C through 6 conditioning rolls; . mono-orienting the heated sheet in 2 stages (680% followed by 30%, which gives the factor 10; (= (100+680)/100 X (100+30)/100) cooling and slightly relaxing the sheet (10% for the thermal shrinking and elastic return).

A square of IOcmxIOcm of this material has been placed in a square mould of the same size and a 5 mm layer of molten HDPE at 205 C has been injected in that mould, and rapidly cooled. To achieve the rapid cooling, the mould is cooled by cold water.

The flexural properties (modulus and strain) are twice those of a non reinforced plate of the same thickness and the same material.

### Example 2

Example 1 has been repeated but by putting 2 reinforcing strips in the mould, one on each side of the injected plate. The flexural properties are 4 times those of a non reinforced plate of the same thickness and the same material.

### Example 3

Some of the oriented HDPE strip obtained in Example 1 was wound around an HDPE pipe having a diameter of 114 mm and a thickness of 4 mm. using 2 different winders to get a cross winding around the pipe with an angle of 55. The so wounded pipe was passed through a circular die in which it was extrusion coated with a layer of the same HDPE in a thickness of 3 mm (extrusion temperature of 224 C and extrusion speed of 1 m/min.). Said coated pipe was cooled using a water jet at a temperature of 12 C impacting on the pipe about 0.5 m after the contact point with the molten polymer. Some samples were cut of the so cooled pipe and examined under crossed Nicoll prims to check how the molecular orientation (and associated birefringence) of the strips was affected. This examination showed that indeed, only a surface layer of less than 100 m lost its orientation, the rest remaining oriented so that the mechanical properties remain fairly unaffected.

## Claims

1. Process for the manufacture of a multi-layered ***polymer*** body comprising at least one reinforcing layer composed of an oriented polymer and at least one basic polymer layer directly in contact with at least a part of the reinforcing layer, wherein the polymer of the basic layer is compatible with the oriented polymer of the reinforcing layer and has about the same melting temperature, said process comprising the steps of
(a) applying the basic polymer layer ***by extrusion coating*** as a stream of molten polymer to at least a part of the surface of the reinforcing layer; and
(b) solidifying the molten polymer on the surface of the reinforcing layer by cooling,
wherein the multi-layered polymer body is a pipe and
wherein the reinforcing layer is applied by winding a reinforced polymer strip composed of an oriented polymer around a support pipe and wherein the basic polymer layer is applied on top of the reinforcing layer,
**characterized in that** the molten polymer is solidified by rapid cooling so that only a small portion of the reinforcing layer melts, said rapid cooling being performed by means of a cooled metal cylinder through which the pipe passes and which is cooled by a fluid able to cool it below 20 °C or by means of cold water jets directly applied on the pipe.

2. Process according to claim 1, wherein the surface of the reinforcing layer which will be in contact with the molten polymer is embossed.

3. Process according to claim 1, wherein the support pipe is made of a polymer compatible with the oriented polymer of the reinforcing layer and that the reinforced polymer strip is adhered to it by applying electromagnetic irradiation.

## Patentansprüche

1. Verfahren zur Herstellung eines mehrschichtigen Polymerkörpers umfassend mindestens eine Verstärkungsschicht, die aus einem orientierten Polymer und mindestens einer Grundpolymerschicht besteht, die direkt in Kontakt mit mindestens einem Teil der Verstärkungsschicht steht, wobei das Polymer der Grundschicht mit dem orientierten Polymer der Verstärkungsschicht verträglich ist und etwa dieselbe Schmelztemperatur aufweist, wobei das Verfahren die Schritte umfasst des
(a) Aufbringens der Grundpolymerschicht durch Extrusionsbeschichten als Strom von geschmolzenem Polymer auf mindestens einen Teil der Oberfläche der Verstärkungsschicht; und
(b) Verfestigens des geschmolzenen Polymers auf der Oberfläche der Verstärkungsschicht durch Kühlen,
wobei der mehrschichtige Polymerkörper ein Rohr ist und
wobei die Verstärkungsschicht durch Wickeln eines verstärkten Polymerstreifens, der aus einem orientierten Polymer besteht, um ein Stützrohr aufgebracht wird und wobei die Grundpolymerschicht oben auf die Verstärkungsschicht aufgebracht wird,
**dadurch gekennzeichnet, dass** das geschmolzene Polymer durch schnelles Kühlen so verfestigt wird, dass nur ein geringer Anteil der Verstärkungsschicht schmilzt, wobei das schnelle Kühlen durch einen gekühlten Metallzylinder durchgeführt wird, durch den das Rohr hindurchgeht und der durch ein Fluid, das in der Lage ist, ihn auf unter 20 °C abzukühlen, oder durch Strahlen von kaltem Wasser, die auf das Rohr aufgebracht werden, gekühlt wird.

2. Verfahren nach Anspruch 1, wobei die Oberfläche der Verstärkungsschicht, die sich in Kontakt mit dem geschmolzenen Polymer befindet, geprägt ist.

3. Verfahren nach Anspruch 1, wobei das Stützrohr aus einem Polymer besteht, das mit dem orientierten Polymer der Verstärkungsschicht verträglich ist und der verstärkte Polymerstreifen daran durch Aufbringen elektromagnetischer Strahlung befestigt wird.

## Revendications

1. Procédé pour la fabrication d'un corps polymère multicouche comprenant au moins une couche de renforcement se composant d'un polymère orienté et au moins une couche de polymère de base directement en contact avec au moins une partie de la couche de renforcement, dans lequel le polymère de la couche de base est compatible avec le polymère orienté de la couche de renforcement et a environ la même température de fusion, ledit procédé comprenant les étapes consistant à :
(a) appliquer la couche de polymère de base par revêtement par extrusion sous forme de vapeur de polymère fondu sur au moins une partie de la surface de la couche de renforcement ; et
(b) solidifier le polymère fondu sur la surface de la couche de renforcement par refroidissement,
dans lequel le corps polymère multicouche est une conduite et
dans lequel la couche de renforcement est appliquée par enroulement d'une bande de polymère renforcée se composant d'un polymère orienté autour d'une conduite de support et dans lequel la couche de polymère de base est appliquée au-dessus de la couche de renforcement,
**caractérisé en ce que** le polymère fondu est solidifié par refroidissement rapide de sorte que seulement une petite partie de la couche de renforcement fond, ledit refroidissement rapide étant réalisé au moyen d'un cylindre métallique refroidi à travers lequel la conduite passe et qui est refroidi par un fluide capable de la refroidir au-dessous de 20 °C ou par le biais de jets d'eau froide directement appliqués sur la conduite.

2. Procédé selon la revendication 1, dans lequel la surface de la couche de renforcement qui va être en contact avec le polymère fondu est gaufrée.

3. Procédé selon la revendication 1, dans lequel la conduite de support se compose d'un polymère compatible avec le polymère orienté de la couche de renforcement et en ce que la bande de polymère renforcée adhère à celle-ci par rayonnement électromagnétique.
